# FASCICULE DE BREVET EUROPEEN

(11) **EP 1 280 324 B1**
(45) Date de publication et mention de la délivrance du brevet: **12.01.2005**
(21) Numéro de dépôt: 02291869.2
(22) Date de dépôt: 24.07.2002
(51) Int. Cl.: H04M 1/725

(54) **Procédé de surveillance acoustique d'un local au moyen de téléphones sans fil**
Akustisches Raumüberwachungsverfahren mit schnurlosen Telefons
Acoustical room monitoring method with cordless telephones

(30) Priorité: 25.07.2001 FR 0109918
(43) Date de publication de la demande: 29.01.2003
(73) Titulaire: SAGEM S.A., 75015 Paris (FR)
(72) Inventeur: Sudrat, Erwan, 95000 Cergy Pontoise (FR)
(74) Mandataire: Bloch, Gérard

(56) Documents cités:
- EP-A- 0 847 173
- EP-A- 0 871 314
- EP-A- 0 933 915
- EP-A- 1 051 875

## Description

La présente invention concerne les réseaux locaux de transmission radio de signaux numériques et en particulier les communications entre les terminaux mobiles d'un tel réseau.

Lorsqu'un tel réseau est établi selon la norme DECT par exemple, il comporte une base radio à travers laquelle les terminaux peuvent communiquer entre eux. La base constitue ainsi un noeud central du réseau qui retransmet à chacun des terminaux les signaux numériques de voix ou de données reçus de son correspondant avec lequel il communique.

Pour traiter une pluralité de communications simultanées la base radio asservit les terminaux en les synchronisant sur une trame temporelle d'une pluralité de canaux dont les premiers sont réservés aux transmissions de la base vers les terminaux et les derniers sont réservés aux transmissions aux transmissions de sens opposé. Une telle trame est du type TDMA/TDD à Accès Multiple par Division Temporelle/Division Temporelle Duplex. Pour établir cet asservissement temporel la base émet cycliquement une balise, un mot de code dans un canal d'émission prédéterminé, en indiquant son rang dans la trame. Tout terminal qui entre dans la zone de couverture radio de la base reconnaît la balise et, d'après l'instant correspondant et le rang du canal, il en détermine le début de la nouvelle trame de la base.

Au sein d'un tel réseau, on sait aussi établir une liaison en mode direct de terminal à terminal. Ce mode de communication permet à deux utilisateurs de communiquer sans avoir besoin d'être à portée de la base DECT. Les utilisateurs enregistrent au préalable un numéro de groupe, le numéro de leur combiné téléphonique et le numéro de leur correspondant. Pour établir la communication, on sélectionne dans le menu des deux combinés téléphoniques la fonction mode direct. Les deux combinés téléphoniques sont alors en l'état actif non synchronisé, en recherche de base. L'appelant spécifie le numéro de combiné téléphonique de l'appelé puis appuie sur le bouton de prise de ligne. Il se transforme en base radio et émet un signal de balise. Le combiné téléphonique appelé détecte la balise sur laquelle il se synchronise et diffuse une sonnerie sur son haut-parleur. L'appelé décroche et établit la communication.

Dans les systèmes connus, on sait aussi établir une autre fonction qui est la surveillance à distance d'un espace de travail ou d'habitation. En sélectionnant cette fonction sur le menu de son appareil mobile, l'utilisateur configure le combiné téléphonique pour décrocher immédiatement et sans sonnerie lorsqu'il est appelé. L'utilisateur place le combiné téléphonique dans le local qu'il souhaite surveiller, la chambre d'un enfant par exemple. En l'appelant depuis un autre combiné téléphonique qui se trouve à distance, il peut écouter les bruits de la pièce sous surveillance.

Par exemple, EP871314 décrit un appareil téléphonique comportant une station de base radio connectée au réseau commuté et deux dispositifs d'abonné avec un microphone. Des liaisons de surveillance sont prévues pour échanger des informations entre les dispositifs d'abonné, en particulier dans une application de surveillance d'un sujet, enfant ou malade.

L'application telle qu'elle est connue de la Demanderesse est toutefois limitée à un usage où les combinés téléphoniques sont à portée de la base radio.

La demanderesse s'est donc fixé comme objectif d'étendre les possibilités d'utilisation de la fonction de surveillance à distance. En particulier, elle a cherché une solution permettant l'utilisation de la fonction de surveillance hors de la portée de la base radio.

L'invention se rapporte donc à un procédé de surveillance à distance d'un espace de travail ou d'habitation au moyen de deux combinés téléphoniques (C1, C2) d'un réseau local de radio communication à accès duplex multiple par division temporelle, comprenant au moins une base radio reliée à un réseau externe tel que le réseau téléphonique commuté et, associés à celle-ci, les deux combinés téléphoniques (C1, C2), le premier combiné téléphonique (C1) comportant la fonction surveillance d'espace et ayant activé cette dernière, caractérisé par le fait que les deux combinés téléphoniques étant hors de portée de ladite base radio et au moins l'un des deux étant agencé pour pouvoir se transformer en base radio, ce dernier combiné téléphonique se transforme en base radio pour établir une communication directe avec l'autre combiné téléphonique.

Grâce à l'invention il est donc possible pour des utilisateurs qui sont hors de leur domicile, en vacance par exemple, de mettre en surveillance simplement une pièce, la chambre des enfants, en emportant avec eux les seuls combinés téléphoniques sans la base radio.

Selon un premier mode de réalisation, le procédé est caractérisé par le fait que, le second combiné téléphonique (C2) étant agencé pour pouvoir se transformer en base radio, il comporte l'étape de mise en service du premier combiné téléphonique (C1) avec la fonction surveillance et l'étape d'appel en mode direct de C1 par C2.

Selon un second mode de réalisation, le procédé est caractérisé par le fait que le combiné téléphonique comportant la fonction de surveillance comprenant également un détecteur de niveau sonore se transforme en base radio lorsque le niveau sonore atteint un seuil prédéterminé.

L'invention sera mieux comprise et d'autres caractéristiques apparaîtront à la lecture de la description qui suit, donnée à titre d'exemple non limitatif en regard des dessins annexés sur lesquels,
la figure 1 représente schématiquement un réseau local de radiocommunication DECT,
la figure 2 représente un schéma fonctionnel d'un combiné téléphonique du réseau et,
la figure 3 représente la disposition de deux combinés téléphoniques dans les pièces d'une habitation.

Le réseau téléphonique est un réseau à la norme DECT et comporte une base radio 1 reliée à une liaison 10 d'un réseau externe, le réseau téléphonique commuté par exemple ; la base gère les communications d'une pluralité de terminaux radios tels que ceux référencés C1 et C2 situés dans la zone de couverture radio de la base.

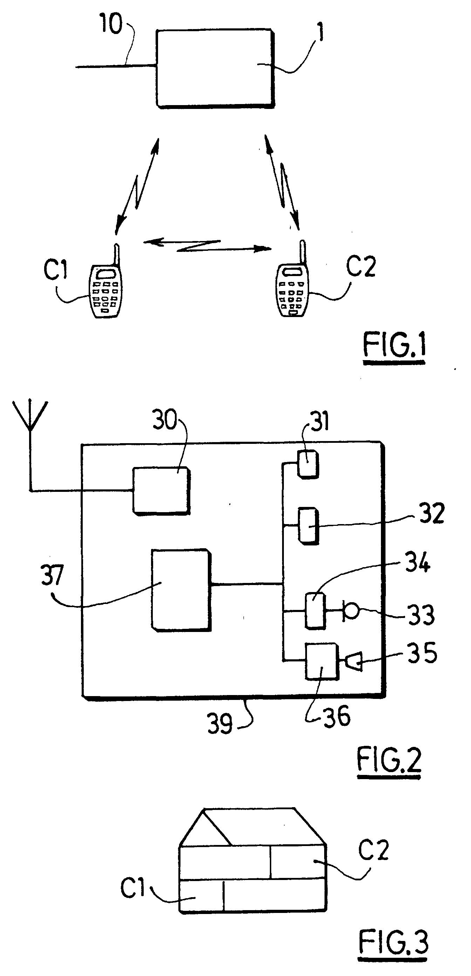

La figure 2 représente schématiquement les différents blocs fonctionnels d'un combiné téléphonique C1 mis en oeuvre dans le cadre de l'invention. Le combiné téléphonique comprend de façon classique, un bloc d'émission et de réception radio 30, une interface homme-machine 39 et un bloc central de commande 37. Le bloc radio 30 est destiné à émettre et recevoir des données à travers un canal de transmission radio, suivant le protocole DECT, afin de communiquer avec la base. L'interface homme-machine 39 comprend un clavier de saisie 3, un écran d'affichage 32, un microphone 33 et un haut-parleur 35. Le microphone 33 et le haut-parleur 35 sont respectivement reliés à un convertisseur analogique /numérique (CAN) 34 et à un convertisseur numérique/analogique (CNA) 36. Le clavier de saisie 31 comprend des touches téléphoniques standards, une touche pour commander l'affichage d'un menu principal et des touches pour se déplacer dans l'arborescence de menus. Le bloc central de commande 37 comprend un micro-processeur, auquel tous les éléments du combiné téléphonique C1 sont reliés, et est agencé pour commander le fonctionnement du combiné téléphonique C1.

Conformément à l'invention les deux combinés téléphoniques sont hors de portée de la base. On place un premier combiné téléphonique C1 dans la pièce par exemple que l'on souhaite surveiller. On le met en service et on sélectionne dans le menu la fonction de surveillance. Le combiné téléphonique est alors en l'état actif non synchronisé. Il balaye à intervalles réguliers, toutes les 10 secondes, les canaux à la recherche d'un signal de balise avec l'identité appropriée.

L'utilisateur place le second combiné téléphonique dans une seconde pièce d'où il souhaite surveiller à distance les bruits émis dans la première pièce. Il le met en service. Dans la meure où le second combiné téléphonique comporte cette fonction, l'utilisateur sélectionne le mode direct et le numéro du premier combiné téléphonique, celui-ci correspond au numéro qu'il a pré-enregistré en mémoire. Il appuie sur la touche de prise de ligne. A ce moment le combiné téléphonique émet un signal de balise sur lequel le premier combiné téléphonique se synchronise et décroche. L'utilisateur peut ainsi écouter les bruits émis dans la première pièce jusqu'à ce qu'il raccroche.

Conformément à une autre caractéristique le combiné téléphonique comporte un moyen par lequel le haut-parleur est mis hors-circuit lorsqu'il est en mode de surveillance afin qu'il reste silencieux pendant la surveillance.
Conformément à un autre mode de réalisation le premier combiné téléphonique C1 est agencé d'une part pour pouvoir se transformer en base radio et d'autre part pour appeler le combiné téléphonique C2 dont le numéro a été préalablement enregistré. C1 comporte également un moyen de détection de niveau sonore par lequel il déclenche la prise de ligne. Il se transforme alors en base radio appelant le combiné téléphonique C2. En supposant alors que le second combiné téléphonique C2 est en service, c'est à dire en l'état actif non synchronisé, C2 se met à sonner. L'utilisateur en décrochant peut alors écouter les bruits émis dans la pièce sous surveillance.

Conformément à un mode de réalisation particulier le combiné téléphonique appelant, qui se transforme en base radio lorsqu'une communication en mode direct est établie, est également agencé pour émettre un signal de balise comportant un message de type à sonnerie de groupe. Grâce à cette disposition il n'est pas nécessaire de prévoir la saisie du numéro du second combiné téléphonique.

Conformément à une autre caractéristique, le second combiné téléphonique est paramétré pour décrocher à la première sonnerie. Dans ce cas le second combiné téléphonique qui se trouvait en veille va diffuser les sons émis dans la pièce sous surveillance sans que l'utilisateur ait à décrocher.

## Revendications

1. Procédé de surveillance d'un espace de travail ou d'habitation à distance au moyen de deux combinés téléphoniques (C1, C2) d'un réseau local de radio communication à accès duplex multiple par division temporelle, comprenant au moins une base radio (1) reliée à un réseau externe tel que le réseau téléphonique commuté et associés à celle-ci lesdits deux combinés téléphoniques (C1, C2), le premier C1 comportant la fonction surveillance d'espace et ayant activé ladite fonction, **caractérisé par le fait que**, les deux combinés téléphoniques étant hors de portée radio de ladite base radio(1) et au moins l'un des deux étant agencé pour pouvoir se transformer en base radio, ce dernier combiné téléphonique se transforme en base radio pour établir une communication directe avec l'autre combiné téléphonique.

2. Procédé selon la revendication précédente, le second combiné téléphonique (C2) étant agencé pour pouvoir se transformer en base radio, **caractérisé par le fait qu'**il comporte l'étape de mise en service du premier (C1) avec la fonction surveillance, et l'étape d'appel en mode direct du combiné téléphonique C1 par le combiné téléphonique C2.

3. Procédé selon l'une des revendications précédentes, **caractérisé par le fait que** le haut-parleur du combiné téléphonique (C1) est inactif lorsque la fonction surveillance est activée.

4. Procédé selon la revendication 1, **caractérisé par le fait que** le combiné téléphonique (C1) comporte un détecteur de niveau sonore et est agencé pour pouvoir se transformer en base radio appelante lorsque le niveau sonore atteint un seuil prédéterminé.

5. Procédé selon l'une des revendications précédentes, **caractérisé par le fait que**, le second combiné téléphonique (C2) est paramétré pour décrocher à la première sonnerie.

6. Procédé selon l'une des revendications précédentes, **caractérisé par le fait que** le combiné téléphonique appelant, qui se transforme en base radio lorsqu'une communication en mode direct est établie, est également agencé pour émettre un signal de balise comportant un message de type à sonnerie de groupe.

7. Combiné téléphonique pour la mise en oeuvre du procédé selon l'une des revendications 4 et suivantes, et agencé pour pouvoir se transformer en base radio, **caractérisé par le fait qu'**il comporte un détecteur de niveau sonore et est agencé pour se transformer en base radio après détection d'un signal sonore ayant dépassé un seuil déterminé.

## Claims

1. Method of monitoring remotely a working or living space by means of two handsets (C1, C2) of a local radio-communication network with time-division multiple access/duplex, comprising at least one radio base (1) connected to an external network such as the switched telephone network, and, associated with this base, the said two handsets (C1, C2), the first C1 including the function of space monitoring and having activated said function, **characterised in that**, the two handsets being out of the radio range of said radio base (1) and at least one of the two being arranged to be able to transform itself into a radio base, the latter handset transforms itself into a radio base to establish a direct communication with the other handset.

2. Method according to the preceding claim, the second handset (C2) being arranged to be able to transform itself into a radio base, **characterised in that** it includes the stage of putting the first handset (C1) into service with the monitoring function, and the stage of the first handset C1 being called in direct mode by handset C2.

3. Method according to one of the preceding claims, **characterised in that** the loudspeaker of the handset (C1) is inactive when the monitoring function is activated.

4. Method according to claim 1, **characterised in that** the handset (C1) includes a sound level detector and is arranged to be able to transform itself into a calling radio base when the sound level reaches a predetermined threshold.

5. Method according to one of the preceding claims, **characterised in that** the parameters of the second handset (C2) are set to unhook at the first ring.

6. Method according to one of the preceding claims, **characterised in that** the calling handset, which transforms itself into a radio base when a communication in direct mode is established, is also arranged to send a beacon signal including a message of the group ringing type.

7. Handset for implementing the method according to one of claims 4 and following, and arranged to be able to transform itself into a radio base, **characterised in that** it includes a sound level detector and is arranged to transform itself into a radio base after detection of a sound signal which has exceeded a specific threshold.

## Patentansprüche

1. Verfahren zur Fernüberwachung eines Wohn- oder Arbeitsraums mittels zweier Telefonhandgeräte (C1, C2) eines lokalen Funkverbindungsnetzes mit Mehrfachzugriff im Zeitmultiplex, mindestens eine Funkbasisstation (1) umfassend, die an ein externes Netz wie das Fernsprechwahlnetz angeschlossen ist, und der zwei Telefonhandgeräte (C1, C2) zugeordnet sind, wobei das erste (C1) die Raumüberwachungsfunktion umfasst, und wenn diese Funktion aktiviert ist, **dadurch gekennzeichnet ist, dass**, wenn die beiden Telefonhandgeräte außerhalb des Funkbereichs der Funkbasisstation (1) sind und mindestens eines der beiden dazu eingerichtet ist, sich in eine Funkbasisstation verwandeln zu können, dieses letztgenannte Telefonhandgerät sich in eine Funkbasisstation verwandelt, um eine direkte Verbindung mit dem anderen Telefonhandgerät herzustellen.

2. Verfahren nach dem vorhergehenden Anspruch, wobei das zweite Telefonhandgerät (C2) dazu eingerichtet ist, sich in eine Funkbasisstation verwandeln zu können, **dadurch gekennzeichnet, dass** es den Schritt des Inbetriebsetzens des ersten (C1) mit der Überwachungsfunktion und den Schritt des Anrufens des Telefonhandgeräts (C1) durch das Telefonhandgerät (C2) im Direktbetrieb umfasst.

3. Verfahren nach einem der vorhergehenden Ansprüche, **dadurch gekennzeichnet, dass** der Lautsprecher des Telefonhandgeräts (C1) inaktiv ist, während die Überwachungsfunktion aktiviert ist.

4. Verfahren nach Anspruch 1, **dadurch gekennzeichnet, dass** das Telefonhandgerät (C1) einen Schallpegeldetektor umfasst und dazu eingerichtet ist, sich in eine anrufende Funkbasisstation verwandeln zu können, wenn der Schallpegel einen vorbestimmten Schwellenwert erreicht.

5. Verfahren nach einem der vorhergehenden Ansprüche, **dadurch gekennzeichnet, dass** das zweite Telefonhandgerät (C2) parametrisiert ist, um beim ersten Läuten abzuheben.

6. Verfahren nach einem der vorhergehenden Ansprüche, **dadurch gekennzeichnet, dass** das anrufende Telefonhandgerät, das sich in eine Funkbasisstation verwandelt, wenn eine Verbindung im Direktbetrieb hergestellt wird, ebenfalls dazu eingerichtet ist, ein Markierungssignal zu senden, das eine Nachricht von der Art eines Gruppenrufsignals umfasst.

7. Telefonhandgerät zum Durchführen des Verfahrens nach einem der Ansprüche 4 bis 6, das dazu eingerichtet ist, sich in eine Funkbasisstation verwandeln zu können, **dadurch gekennzeichnet, dass** es einen Schallpegeldetektor umfasst und dazu eingerichtet ist, sich nach dem Erfassen eines Schallsignals, das einen vorbestimmten Schwellenwert überschritten hat, in eine Funkbasisstation zu verwandeln.
